# EUROPEAN PATENT SPECIFICATION

(11) **EP 2 052 626 B1**
(45) Date of publication and mention of the grant of the patent: **02.11.2016**
(21) Application number: 07790749.1
(22) Date of filing: 13.07.2007
(51) Int. Cl.: A23C 19/076, A23C 9/142, A23C 19/045, A23C 19/05

(54) **FRESH CHEESE AND PROCESS FOR PRODUCING THE SAME**
FRISCHKÄSE UND VERFAHREN ZU SEINER HERSTELLUNG
FROMAGE FRAIS ET SON PROCÉDÉ DE PRODUCTION

(30) Priority: 14.07.2006 JP 2006194954
(43) Date of publication of application: 29.04.2009
(73) Proprietor: MEGMILK SNOW BRAND Co., Ltd., Higashi-ku Sapporo (JP)
(72) Inventor: IMAI, Hiroshi, Saitama 350-1165 (JP); SASAJIMA, Yuko, Saitama 350-1165 (JP); MATSUNAGA, Mayumi, Saitama 350-1165 (JP); MUTOU, Takaaki, Saitama 350-1165 (JP); SAKAMAKI, Koji, Saitama 350-1165 (JP); TOMIZAWA, Akira, Saitama 350-1165 (JP); SHIINOKI, Yasuhiko, Saitama 350-1165 (JP)
(74) Representative: Andrae | Westendorp Patentanwälte Partnerschaft
(86) International application number: PCT/JP2007/063968
(87) International publication number: WO 2008/007769

(56) References cited:
- JP-A- 11 103 772
- JP-A- 2000 245 341
- BLANCHETTE L ET AL: "Production of Cottage Cheese Using Dressing Fermented by Bifidobaceria", JOURNAL OF DAIRY SCIENCE, AMERICAN DAIRY SCIENCE ASSOCIATION, US, vol. 79, no. 1, 1 January 1996 (1996-01-01), pages 8-15, XP027047935, ISSN: 0022-0302 [retrieved on 1996-01-01]

## Description

### Technical Field

The present invention relates to fresh cheese and a process for producing the same. The fresh cheese of the present invention is significantly reduced in spoilage, deterioration of taste or flavor, and deterioration of texture and has excellent long-term keeping quality.

### Background Art

Fresh cheese, which includes cottage cheese, mozzarella cheese, quark, cream cheese, mascarpone, etc., is usually made by a traditional production process. However, fresh cheese has very poor keeping quality and is mostly subject to spoilage, deterioration of taste or flavor, or deterioration of texture during storage. This is because product acidity is increased due to the over-fermentation caused by a starter or because fats or proteins are degraded by the action of enzymes derived from general bacteria or lactic acid bacteria present in raw materials or during a production process, resulting in deterioration of taste or flavor or deterioration of texture. To solve such problems, attempts are being made in such a way that fresh cheese is subjected to heat treatment such as retort treatment for killing lactic acid bacteria, general bacteria, or the like or that keeping quality is enhanced by inactivating enzymes or the like. However, these methods are not preferable because of their large influence on taste or flavor or texture.

Moreover, another attempt is being made in such a way that keeping quality is improved by means of additives. However, this method is not preferable because additive-free products are demanded as nature-conscious trends in recent years. Moreover, it also presents the problem that taste or flavor or the like derived from additives have bad influence on products.

In general, a method for enhancing the keeping quality of food includes a method which involves reducing water activity, reducing pH, or using the bacteriostatic effects of an organic acid.

However, for cheese, which has a high water content, water activity is difficult to control. Thus, this approach does not help enhance keeping quality. Moreover, the pH or water content of a product is predetermined to some extent in terms of the characteristics of each cheese. Thus, the pH or water content cannot be reduced only for the purpose of improving keeping quality.

Moreover, examples of the method which involves reducing product pH include lactic fermentation using lactic acid. However, this method presents the problem of deterioration of taste or flavor attributed to over-fermentation during storage. Furthermore, when the method which involves enhancing keeping quality using an organic acid is applied to cheese production, the organic acid is possibly added in advance to raw material cheese milk for cheese production. In this case, the milk coagulates along with the addition of the acid. Therefore, the organic acid cannot be added thereto until the pH reaches a given value or lower (e.g., 5.6 or lower), resulting in the limited amount of the organic acid added. Additionally, in a usual cheese production process, the added organic acid escapes into whey. Therefore, only a small amount of the organic acid remains in the produced curd. Thus, the organic acid is retained, in the curd, in an amount insufficient for helping enhance keeping quality. Furthermore, the organic acid might be sprayed, immersed, or injected directly into cheese. However, this approach is not preferable in terms of product characteristics because the taste or flavor of the organic acid gets strong.

In this context, cheese obtained by acidifying concentrated milk, followed by heating and kneading is disclosed in Patent Documents 1, 2, and 3 as to a process for producing cheese curd using concentrated milk.

However, the technique described in Patent Document 1 is a production process that involves adjusting pH using lactic acid for coagulation and does not require rennet. Alternatively, the technique described in Patent Document 2 is a process that involves heating an ultrafiltrate of concentrated milk. All of these documents merely disclose a process for efficient continuous production of cheese. Alternatively, Patent Document 3 discloses a technique for enhancing keeping quality as thermal melting, fibrous, and stringy properties characteristic of cheese by adding sugars and/or salts to concentrated milk. However, this technique is intended for keeping quality in terms of the characteristics of cheese and does not enhance keeping quality in terms of cheese taste or flavor or microorganisms.
Patent Document 1: Japanese Patent Laid-Open No. 63-98350
Patent Document 2: Japanese Patent Laid-Open No. 2-35037
Patent Document 3: Japanese Patent Laid-Open No. 6-78669

Blanchette L. et al. describe in "Production of Cottage Cheese Using Dressing Fermented by Bifidobacteria", Journal of Dairy Science, American Dairy Science Association, US, Volume 79, No. 1, January 1, 1996, pages 8 - 15, the production of creamed cottage cheese by adding cream dressing fermented by *Bifidobacterium infantis* to the dry curd. On page 10, left column, the cottage cheese manufacture is described.

### Disclosure of the Invention

### Problems to be Solved by the Invention

An object of the present invention is to solve the problems of conventional techniques and to provide fresh cheese that is significantly reduced in deterioration of taste or flavor and deterioration of texture and has excellent keeping quality, and a process for producing the same.

### Means for Solving the Problems

The present inventors have conducted diligent studies for attaining the object and have consequently completed the present invention by finding that fresh cheese having a whey protein content of 15 mg or lower per g of solid matter and an acetic acid content of 25 to 500 mg per 100 g of the cheese, which is obtained by a production process comprising steps of concentrating skim milk by a microfiltration membrane and acidifying the concentrated milk obtained by microfiltration to pH 4.8 to 5.8 by the addition of acetic acid, followed by heating and kneading, is significantly reduced in deterioration of taste or flavor and deterioration of texture during storage.

Specifically, the present invention provides fresh cheese having a whey protein content of 15 mg or lower per g of solid matter and an acetic acid content of 25 to 500 mg per 100 g of the cheese.

The present invention also provides a process for producing the fresh cheese, characterized by comprising steps of concentrating skim milk by a microfiltration membrane and adjusting the concentrated milk obtained by microfiltration to pH 4.8 to 5.8 by the addition of acetic acid, followed by heating and kneading.

### Advantages of the Invention

The present invention provides fresh cheese that is significantly reduced in deterioration of taste or flavor and deterioration of texture during storage and improved in keeping quality.

### Best Mode for Carrying Out the Invention

Hereinafter, the present invention will be described with reference to examples.

Skim milk used as a raw material of the present invention is not particularly limited and can be obtained by separating cream by centrifugation from raw milk obtained from, for example, cows, sheep, goats, or buffalos.

It is preferred that the skim milk should be subjected to bacterial elimination, as appropriate, for enhancing keeping quality. In addition to the bacterial elimination, it is also preferred that the skim milk should be sterilized at a temperature similar to a usual sterilization temperature for cheese milk.

Then, the skim milk is concentrated using a microfiltration membrane. The reason for using the microfiltration membrane is that this membrane has a larger pore size than that of an ultrafiltration membrane previously used frequently and permits therethrough passage of whey proteins, which cannot be achieved by the ultrafiltration membrane. It is preferred that the microfiltration membrane should have a pore size of 0.1 to 0.2 µm. It is preferred that the concentration rate should be set to approximately 2 to 8 times, preferably approximately 2 to 5 times.

The concentration using the microfiltration membrane has the advantage that a whey protein/casein protein ratio in the obtained concentrated milk is lower than that obtained using the ultrafiltration membrane. Moreover, the amount of whey proteins incorporated into curd during coagulation by heating is also smaller, resulting in a lower whey protein content in the obtained fresh cheese.

Specifically, the whey protein content in the fresh cheese obtained using the microfiltration membrane is 10 to 15 mg per g of solid matter. A whey protein content in fresh cheese obtained using the ultrafiltration membrane is 16 to 20 mg per g of solid matter. Whey proteins in cheese are involved in deterioration of taste or flavor during storage. Thus, a large whey protein content significantly promotes deterioration of taste or flavor during storage. A whey protein content in cheese exceeding 15 mg per g of solid matter significantly promotes deterioration of taste or flavor during storage. Specifically, the fresh cheese obtained using the microfiltration membrane is very preferable because it is reduced in deterioration of taste or flavor during storage, compared to fresh cheese obtained using the ultrafiltration membrane. On the other hand, a whey protein content decreased by enhancing a concentration rate using the microfiltration membrane may also eliminate other low-molecular-weight fractions such as carbohydrates, minerals, and non-protein nitrogen components, although a lower whey protein content in cheese provides larger reduction in deterioration of taste or flavor during storage. This also deteriorates the taste or flavor of the produced curd. Therefore, it is preferred that the whey protein content in the fresh cheese obtained using the microfiltration membrane should be set to 10 mg as a lower limit per g of solid matter.

The concentrated milk thus obtained can be supplemented with cream. It is preferred that the cream should be homogenized and sterilized in advance by usual treatment and mixed with the concentrated milk to prepare concentrated cheese milk.

The concentrated cheese milk thus obtained is acidified and adjusted to pH 4.8 to 5.8 by the addition of acetic acid. pH exceeding 5.8 is not preferable because the milk neither coagulates nor forms curd. Alternatively, pH lower than 4.8 is not preferable because sufficient coagulation does not take place due to too small pieces of curd. At pH adjusted to 4.8 to 5.8, an acetic acid content in the obtained fresh cheese can be 25 to 500 mg per 100 g of the cheese. The pH that falls within this range provides excellent physical properties as cheese. The acetic acid content can be adjusted by controlling this pH during acidification. The acetic acid content is increased by lowering pH within the range of pH 4.8 to 5.8 or decreased by raising pH within this range. At pH lower than 4.8 or exceeding 5.8, the acetic acid content in the cheese cannot be adjusted appropriately due to insufficient curdling.

In a traditional cheese production process, an organic acid such as acetic acid is added into cheese milk. In this case, the milk coagulates along with the addition of the acid. Therefore, the organic acid cannot be added thereto until the pH reaches a given value or lower, resulting in the limited amount of the organic acid added. Additionally, in a usual cheese production process, the added organic acid escapes into whey. Therefore, disadvantageously, only a small amount of the organic acid remains in the produced curd.

Next, the acidified concentrated milk is heated to form curd. It is preferred that the heating temperature should be 40 to 90°C. The heating method is not particularly limited, and a twin-screw extruder, cheese cooker, hot water, or the like can be used. For example, the concentrated cheese milk can be curdled by mixing with hot water heated to 40 to 90°C. A heating temperature lower than 40°C results in poor curdling. A heating temperature exceeding 90°C results in significant protein denaturation or fat leakage, leading to very poor quality of the obtained cheese.

The cheese curd thus obtained is kneaded to obtain the fresh cheese of the present invention. In this context, the kneading refers to a step in which the grains of the cheese curd are allowed to bind to each other by mixing together for uniform water dispersion to develop both uniform texture and fibrous body. The kneading method is not particularly limited, and a method performed in a usual cheese production process can be used. The heating and the kneading can be performed simultaneously using a twin-screw extruder.

The fresh cheese of the present invention thus obtained is fresh cheese having a whey protein content of 15 mg or lower per g of solid matter and an acetic acid content of 25 to 500 mg per 100 g of the cheese. It is preferred that the whey protein content and the acetic acid content should be set to these ranges, respectively, as described above.

In this context, the fresh cheese of the present invention may be any type of fresh cheese such as cottage cheese, mozzarella cheese, quark, cream cheese, or mascarpone and is preferably kneaded-type cheese produced by a process which involves a kneading step.

### Examples

Hereinafter, the present invention will be described more specifically with reference to Examples.

### (Example 1)

100 kg of skim milk was sterilized at 75°C for 15 seconds and then concentrated by 5 times through a microfiltration membrane (pore size: 0.1 µm) to obtain microfiltration membrane-concentrated milk. This microfiltration membrane-concentrated milk was supplemented with 40% cream (sterilized at 120°C for 2 seconds) to prepare concentrated cheese milk having a fat percentage of 11%. This concentrated cheese milk was adjusted to pH 4.8, 5.4, or 5.8 by the addition of acetic acid, followed by indirect stirring and heating to 60°C within a bath with a jacket to form curd. The obtained curd was kneaded at a product temperature of 60°C and charged into containers to respectively prepare products 1, 2, and 3 of the present invention.

### (Comparative Example 1)

100 kg of raw milk was sterilized at 75°C for 15 seconds and cooled to 30°C. This cheese milk was supplemented with 0.5% commercially available lactic acid starter (manufactured by CHR. Hansen). Moreover, the cheese milk was adjusted to pH 5.8 by the addition of 50% acetic acid and left standing for 20 minutes. Then, the curd appropriately hardened by the addition of 0.003% rennet was cut. The cut pieces of the curd were heated by jacket heating to a final temperature of 60°C over 30 minutes and then left standing for 20 minutes at this temperature. Next, the whey was discharged therefrom. The curd was allowed to reach pH 5.4 at a product temperature kept 40°C. Then, the curd was kneaded in hot water at 70°C and charged into a container to prepare a comparative product 1.

### (Comparative Example 2)

100 kg of skim milk was sterilized at 75°C for 15 seconds and then concentrated by 5 times through an ultrafiltration membrane (molecular weight cut off: 10 kDa) to obtain ultrafiltration membrane-concentrated milk. This ultrafiltration membrane-concentrated milk was supplemented with 40% cream (sterilized at 120°C for 2 seconds) to prepare concentrated cheese milk having a fat percentage of 11%. This concentrated cheese milk was adjusted to pH 4.8, 5.4, or 5.8 by the addition of lactic acid, followed by indirect stirring and heating to 60°C within a bath with a jacket to form curd. The obtained curd was kneaded at a product temperature of 60°C and charged into containers to respectively prepare comparative products 2-1, 2-2, and 2-3.

### (Comparative Example 3)

100 kg of skim milk was sterilized at 75°C for 15 seconds and then concentrated by 5 times through an ultrafiltration membrane (molecular weight cut off: 10 kDa) to obtain ultrafiltration membrane-concentrated milk. This ultrafiltration membrane-concentrated milk was supplemented with 40% cream (sterilized at 120°C for 2 seconds) to prepare concentrated cheese milk having a fat percentage of 11%. This concentrated cheese milk was adjusted to pH 4.8, 5.4, or 5.8 by the addition of acetic acid, followed by indirect stirring and heating to 60°C within a bath with a jacket to form curd. The obtained curd was kneaded at a product temperature of 60°C and charged into containers to respectively prepare comparative products 3-1, 3-2, and 3-3.

### (Comparative Example 4)

100 kg of skim milk was sterilized at 75°C for 15 seconds and then concentrated by 5 times through a microfiltration membrane (pore size: 0.1 µm) to obtain microfiltration membrane-concentrated milk. This microfiltration membrane-concentrated milk was supplemented with 40% cream (sterilized at 120°C for 2 seconds) to prepare concentrated cheese milk having a fat percentage of 11%. This concentrated cheese milk was adjusted to pH 4.8, 5.4, or 5.8 by the addition of lactic acid, followed by indirect stirring and heating to 60°C within a bath with a jacket to form curd. The obtained curd was kneaded at a product temperature of 60°C and charged into containers to respectively prepare comparative products 4-1, 4-2, and 4-3.

### (Test Examples)

The products 1, 2, and 3 of the present invention and the comparative products 1 to 4 were separately charged to an aluminum bag and subjected to a storage test at 10°C. These test subjects were evaluated for items: each component value (acetic acid content and whey protein content), sensory assessment (taste or flavor and texture), and the number of general bacteria.

### · Measurement results of component value

The acetic acid content in the curd was measured using an HPLC method. The whey protein content was quantified by SDS-PAGE fractionating the curd and staining this fraction, followed by comparison with a standard product (β-lactoglobulin) using a densitometer. The results are shown in Table 1. [Table 1]

**(Table 1)**

| | Product of the present invention | | | Comparative product | | | | | | | | | |
|---|---|---|---|---|---|---|---|---|---|---|---|---|---|
| | 1 | 2 | 3 | 1 | 2-1 | 2-2 | 2-3 | 3-1 | 3-2 | 3-2 | 4-1 | 4-2 | 4-3 |
| Concentration membrane | Microfiltration membrane | | | - | Ultrafiltration membrane | | | Ultrafiltration membrane | | | Microfiltration membrane | | |
| Acid type | Acetic acid | | | Acetic acid | Lactic acid | | | Acetic acid | | | Lactic acid | | |
| pH | 4.8 | 5.4 | 5.8 | - | 4.8 | 5.4 | 5.8 | 4.8 | 5.4 | 5.8 | 4.8 | 5.4 | 5.8 |
| Acetic acid content (mg/100 g of cheese) | 500 | 200 | 25 | 20 | 0 | 0 | 0 | 500 | 200 | 25 | 0 | 0 | 0 |
| Whey protein content (mg/g of solid matter) | 12.5 | 12.3 | 12.4 | 10.5 | 16.5 | 16.8 | 16.6 | 16.6 | 16.8 | 16.7 | 12.8 | 12.7 | 12.7 |

As shown in Table 1, all the products 1 to 3 of the present invention had a whey protein content of 15 mg or lower per g of solid matter and an acetic acid content of 25 to 500 mg per 100 g of the cheese. On the other hand, the comparative product 1 produced by the conventional process had an acetic acid content lower than 25 mg. All the comparative products 2-1 to 2-3 and 3-1 to 3-3 produced using the ultrafiltration membrane had a whey protein content exceeding 15 mg per g of solid matter. All the comparative products 4-1 to 4-3 produced by the pH adjustment with lactic acid contained no acetic acid.

### · Sensory assessment results

The test subjects were separately subjected to a storage test at 10°C and to sensory assessment for taste or flavor and texture. The results are shown in Table 2. [Table 2]

**(Table 2)**

| | | Taste or flavor | | | | | | | Texture | | | | | | |
|---|---|---|---|---|---|---|---|---|---|---|---|---|---|---|---|
| Storage period (week) | | 0 | 2 | 4 | 6 | 8 | 10 | 12 | 0 | 2 | 4 | 6 | 8 | 10 | 12 |
| Product of the present invention | 1 | nor | nor | nor | nor | nor | nor | nor | nor | nor | nor | nor | nor | nor | nor |
| | 2 | nor | nor | nor | nor | nor | nor | nor | nor | nor | nor | nor | nor | nor | nor |
| | 3 | nor | nor | nor | nor | nor | nor | nor | nor | nor | nor | nor | nor | nor | nor |
| Comparative product | 1 | nor | nor | - | - | - | - | - | nor | nor | - | - | - | - | - |
| | 2-1 | nor | nor | - | - | - | - | - | nor | nor | - | - | - | - | - |
| | 2-2 | nor | nor | - | - | - | - | - | nor | nor | - | - | - | - | - |
| | 2-3 | nor | nor | - | - | - | - | - | nor | nor | - | - | - | - | - |
| | 3-1 | nor | nor | nor | bt,ms | bt,ms | - | - | nor | nor | nor | soft | soft | - | - |
| | 3-2 | nor | nor | nor | bt,ms | bt,ms | - | - | nor | nor | nor | soft | soft | - | - |
| | 3-3 | nor | nor | nor | bt,ms | bt,ms | - | - | nor | nor | nor | - | - | - | - |
| | 4-1 | nor | nor | - | - | - | - | - | nor | nor | - | - | - | - | - |
| | 4-2 | nor | nor | - | - | - | - | - | nor | nor | - | - | - | - | - |
| | 4-3 | nor | nor | - | - | - | - | - | nor | nor | - | - | - | - | - |

| | | | | | | | | | | | | | | | |
|---|---|---|---|---|---|---|---|---|---|---|---|---|---|---|---|
| Nor: Normal Ms: Musty Bt: Bitter Soft: Soft -: Spoilage | | | | | | | | | | | | | | | |

As shown in Table 2, all the products 1 to 3 of the present invention had no detectable abnormality in taste or flavor and texture up to 12 weeks after the initiation of the storage test. On the other hand, the comparative product 1 produced by the conventional process spoiled in 4 weeks. The comparative products 2-1 to 2-3 and 4-1 to 4-3 produced by the pH adjustment with lactic acid spoiled in 4 weeks. Moreover, the comparative products 3-1 to 3-3 produced using the ultrafiltration membrane had no detectable abnormality in taste or flavor and texture up to 4 weeks. However, abnormal taste or flavor and texture were observed after the 6th or later weeks, and all of them spoiled in 10 weeks.

These results demonstrated that the products of the present invention have more excellent keeping quality than that of the comparative products and have no problem even after 12-week storage from a sensory standpoint.

### • Measurement results of the number of general bacteria

The number of general bacteria was measured using a standard agar medium method. The measurement results of the number of general bacteria are shown in Table 3. [Table 3]

**(Table 3)**

| | | The number of general bacteria (cfu/g) | | | | | | |
|---|---|---|---|---|---|---|---|---|
| Storage period (week) | | 0 | 2 | 4 | 6 | 8 | 10 | 12 |
| Product of the present invention | 1 | 1.5E+01 | 5.0E+01 | 1.5E+02 | 2.0E+02 | 2.0E+02 | 4.0E+02 | 3.5E+02 |
| | 2 | 3.0E+01 | 4.0E+01 | 1.2E+02 | 1.8E+02 | 2.2E+02 | 2.5E+02 | 3.2E+02 |
| | 3 | 5.0E+01 | 5.0E+01 | 2.5E+02 | 2.6E+02 | 2.4E+02 | 2.6E+02 | 4.2E+02 |
| Comparative product | 1 | 4.5E+06 | 5.0E+06 | 6.4E+08 | 6.9E+08 | - | - | - |
| | 2-1 | 5.0E+01 | 1.1E+02 | 1.2E+06 | 4.5E+08 | - | - | - |
| | 2-2 | 5.5E+01 | 1.2E+02 | 2.5E+06 | 3.2E+08 | - | - | - |
| | 2-3 | 7.0E+01 | 1.1E+02 | 2.2E+06 | 4.3E+08 | - | - | - |
| | 3-1 | 4.5E+01 | 1.4E+02 | 2.5E+02 | 4.5E+04 | 8.0E+04 | 5.8E+08 | - |
| | 3-2 | 5.0E+01 | 1.3E+02 | 3.0E+02 | 6.8E+04 | 7.4E+04 | 4.7E+08 | - |
| | 3-3 | 6.0E+01 | 1.6E+02 | 2.8E+02 | 5.7E+04 | 6.8E+04 | 5.9E+08 | - |
| | 4-1 | 8.0E+01 | 1.5E+02 | 3.0E+06 | 5.8E+08 | - | - | - |
| | 4-2 | 7.5E+01 | 1.2E+02 | 4.5E+06 | 7.0E+08 | - | - | - |
| | 4-3 | 6.0E+01 | 1.3E+02 | 3.8E+06 | 6.5E+08 | - | - | - |

As shown in Table 3, in the products of the present invention, increase in the number of general bacteria was suppressed up to 12 weeks. On the other hand, in the comparative product 1 produced by the traditional production process, the number of general bacteria was increased to the order of 10⁸ in 4 weeks. In the comparative products 2-1 to 2-3 and 4-1 to 4-3 produced by the pH adjustment with lactic acid, the number of general bacteria was increased to the order of 10⁸ in 6 weeks. Moreover, in the comparative products 3-1 to 3-3 produced using the ultrafiltration membrane, the number of general bacteria was increased to the order of 10⁸ in 10 weeks.

This demonstrated that the products of the present invention have no problem even after 12-week storage in terms of microorganisms.

### (Comparative Example 5)

Fresh cheese produced by the method of Comparative Example 1 was permeated with acetic acid by immersion at 10°C for 6 hours in an acetic acid solution having a concentration of 0.01%, 0.1%, 0.3%, or 0.5% to respectively prepare comparative products 5-1, 5-2, 5-3, and 5-4. Results of component values and sensory assessment are shown in Table 4. [Table 4]

**(Table 4)**

| | Product of the present invention | | | Comparative product | | | |
|---|---|---|---|---|---|---|---|
| | 1 | 2 | 3 | 5-1 | 5-2 | 5-3 | 5-4 |
| Concentration of acetic acid solution for immersion (%) | - | - | - | 0.01 | 0.1 | 0.3 | 0.5 |
| Acetic acid content in cheese (mg/100 g of cheese) | 500 | 200 | 25 | 5 | 34 | 110 | 450 |
| Evaluation for taste or flavor | Slight smell of acetic acid | Normal | Normal | Slight smell of acetic acid | Smell of acetic acid | Smell of acetic acid | Smell of acetic acid |

As shown in Table 4, the comparative products 5-2, 5-3, and 5-4 were not preferable because of the stronger taste or flavor of acetic acid than that of the products of the present invention. This means that the products of the present invention, which are produced by acidifying microfiltration membrane-concentrated milk with acetic acid and then coagulating the milk by heating for incorporating thereinto a given amount of the acetic acid, are preferable from a sensory standpoint because of the much weaker taste or flavor of acetic acid than that of the products obtained by the process which involves immersing cheese in acetic acid. Moreover, the comparative product 1 having a low acetic acid content produced satisfactory results in sensory assessment in terms of smell of acetic acid. However, it had poor keeping quality, as seen in the comparative product 1.

### Industrial Applicability

The present invention provides a fresh cheese that is significantly reduced in deterioration of taste or flavor and deterioration of texture during storage and has excellent keeping quality, and a process for producing the same.

## Claims

1. Fresh cheese **characterized by** having a whey protein content of 15 mg or lower per g of solid matter and an acetic acid content of 25 to 500 mg per 100 g of the cheese, which is prepared by a process **characterized by** comprising steps of concentrating skim milk by a microfiltration membrane and adjusting the concentrated milk obtained by microfiltration to pH 4.8 to 5.8 by the addition of acetic acid, followed by heating and kneading.

2. A process for producing a fresh cheese according to claim 1, **characterized by** comprising steps of concentrating skim milk by a microfiltration membrane and adjusting the concentrated milk obtained by microfiltration to pH 4.8 to 5.8 by the addition of acetic acid, followed by heating and kneading.

## Patentansprüche

1. Frischkäse, **gekennzeichnet durch** das Aufweisen eines Molkeprotein-Gehalts von 15 mg oder weniger pro g festes Material und eines Essigsäure-Gehalts von 25 bis 500 mg pro 100 g des Käses, welcher **durch** ein Verfahren hergestellt wird, das **gekennzeichnet ist durch** das Umfassen von Schritten von Konzentrieren von Magermilch **durch** eine Mikrofiltrationsmembran und Einstellen der konzentrierten Milch, die **durch** Mikrofiltration erhalten wird, auf einen pH-Wert von 4,8 bis 5,8 durch Zugeben von Essigsäure, gefolgt von Erwärmen und Kneten.

2. Verfahren zur Herstellung eines Frischkäses gemäß Anspruch 1, **gekennzeichnet durch** das Umfassen von Schritten von Konzentrieren von Magermilch **durch** eine Mikrofiltrationsmembran und Einstellen der konzentrierten Milch, die **durch** Mikrofiltration erhalten wird, auf einen pH-Wert von 4,8 bis 5,8 **durch** Zugeben von Essigsäure, gefolgt von Erwärmen und Kneten.

## Revendications

1. Fromage frais **caractérisé en ce qu'**il présente une teneur en protéine de lactosérum de 15 mg, ou moins, par gramme de matière solide, et une teneur en acide acétique comprise entre 25 mg et 500 mg par 100 grammes du fromage, qui est préparé en exécutant un procédé **caractérisé en ce qu'**il comprend les étapes de concentration d'un lait écrémé à l'aide d'une membrane de microfiltration et à ajuster le pH du lait concentré obtenu par microfiltration entre 4,8 et 5,8 par l'addition d'acide acétique, suivie d'un chauffage et d'un malaxage.

2. Procédé de production d'un fromage frais selon la revendication 1, **caractérisé en ce qu'**il comprend les étapes de concentration d'un lait écrémé à l'aide d'une membrane de microfiltration et à ajuster le pH du lait concentré obtenu par microfiltration entre 4,8 et 5,8 par l'addition d'acide acétique, suivie d'un chauffage et d'un malaxage.
